# EUROPEAN PATENT SPECIFICATION

(11) **EP 3 061 222 B1**
(45) Date of publication and mention of the grant of the patent: **13.01.2021**
(21) Application number: 14790058.3
(22) Date of filing: 24.10.2014
(51) Int. Cl.: H04W 12/04, H04W 12/00, H04L 29/06, H04L 9/08

(54) **CONTROLLED CREDENTIALS PROVISIONING BETWEEN USER DEVICES**
GESTEUERTE BEREITSTELLUNG VON NACHWEISEN ZWISCHEN BENUTZERGERÄTEN
APPROVISIONNEMENT CONTRÔLÉ DE JUSTIFICATIFS D'IDENTITÉ ENTRE DES DISPOSITIFS UTILISATEURS

(30) Priority: 24.10.2013 EP 13190078
(43) Date of publication of application: 31.08.2016
(73) Proprietor: Koninklijke KPN N.V., 3072 AP Rotterdam (NL); Nederlandse Organisatie voor toegepast- natuurwetenschappelijk onderzoek TNO, 2595 DA 's-Gravenhage (NL)
(72) Inventor: DE KIEVIT, Sander, Shinagawa-ku Tokyo 140-0013 (JP)
(74) Representative: Wuyts, Koenraad Maria
(86) International application number: PCT/EP2014/072874
(87) International publication number: WO 2015/059286

(56) References cited:
- EP-A1- 2 665 237
- WO-A1-2012/035335
- DE-A1- 10 012 057
- US-A1- 2002 169 966
- US-A1- 2012 047 551

## Description

### FIELD OF THE INVENTION

The invention relates to controlled credentials provision between user devices. In particular, the invention relates to a control method by a first user device for user data exchange of a second user device over a telecommunications network, the control method enabling the first user device to stay in control when provisioning credentials from the first user device to the second user device.

### BACKGROUND

Over the last years, the number of user devices, which can use or need connectivity has increased steadily. Currently, devices such as televisions, game consoles, camera's etc. come with facilities to connect to wifi access points or cabled in-house Ethernet. It is expected that in the upcoming years a typical household will have a hundred connected devices, a large part of which is portable (tablet, phone, game console, camera, navigation system, car keys, medical devices, watches, eyeglasses comprising cameras, electronic displays, etc.).

For some of these devices, connectivity is limited to wifi access points. Whereas that is not a problem for local devices, such as a refrigerator or heating system, for portable devices this means that when used on the move, access is only intermittent and often a burden to configure.

A solution to this problem would be to provide every user device with its own subscription in a telecommunications network comprising a wireless access network. Although such a solution would provide access while traveling, it comes with a burden of managing all the different subscriptions (potentially with different providers) for all the different devices for both the user and the operator of the telecommunications network. Moreover, every subscription may likely come with its own subscription fee. Therefore an easier solution is necessary that provides the user with sufficient flexibility to provide connectivity for devices while on the move. These devices comprise any of the devices mentioned in the previous paragraph and can be portable or integrated in a vehicle, in a machine or in an apparatus, e.g. household appliances.

US 2012/0129498 discloses a method and device for allowing a wireless communication device initially unauthorized for communication with a network to obtain persistent soft network subscription credential information from a wireless communication device initially authorized for communication with the network. The transfer of the subscription credentials from one device to another authorizes the previously unauthorized device to become authorized for communication with the network. The method ensures that only one communication device is capable of communicating with a network at any one time.

The prior art method and device allows user data exchange over the telecommunications network for multiple user devices by obtaining credential information from another device. Only the latter device needs to have a subscription with the telecommunications network. However, the prior art method assumes complete trust of the (user of the) devices obtaining the credential information from the device originally having the credential information.

US2002/0169966 A1 discloses a client that may be authenticated by transmitting or beaming a telecommunication network subscriber's authentication to the client from a device, over a wireless link. For example, a GSM telephone may authenticate an electronic book to a content providing service within the Internet. The service verifies the authentication using the subscriber's GSM network operator's Authentication Center to generate an authenticator and the client correspondingly generates a local copy of the authenticator using a GSM SIM over the wireless local link. The authentication is then determined by checking that these authenticators match and thereafter the authenticator can be used as a session key to encrypt data in the service. The authenticator may be valid for a predetermined time period.

DE10012057 discloses transferring identification/authentication data from global system for mobile communication (GSM) mobile telephone to vehicle mounted radio telephone, for providing radio network services to radio telephone. Need for separate SIM card in each device is avoided, as identification/authentication data is transferred simply and inexpensively through interface. The distance between the devices is controlled and if it is over the threshold, the vehicle mounted radio telephone is disconnected.

### SUMMARY

The present invention is defined by the subject matter of the independent claims. Preferred embodiments are defined by the dependent claims.

### BRIEF DESCRIPTION OF THE DRAWINGS

Aspects of the invention will be explained in greater detail by reference to exemplary embodiments shown in the drawings, in which:
FIG. 1 is a schematic illustration of system comprising a first user device and a second user device in combination with a telecommunications network;
FIG. 2 is a time diagram illustrating an embodiment of the disclosed method;
FIG. 3 is a general overview diagram of an LTE network and a 3G network;
FIG. 4 is an illustration of the key hierarchy in the LTE network shown in FIG. 3;
FIGS. 5-8B are various embodiments of methods wherein the first user devices provides a portion of the credentials to the second user device;
FIG. 9 is an embodiment of a method wherein the first user device only provides a user plane key to the second user device;
FIGS. 10-12 are various embodiments of methods wherein the first user device provides all of the user credentials to the second user device; and
FIGS. 13 and 14 provide an embodiment for a next generation network.

### DETAILED DESCRIPTION OF THE DRAWINGS

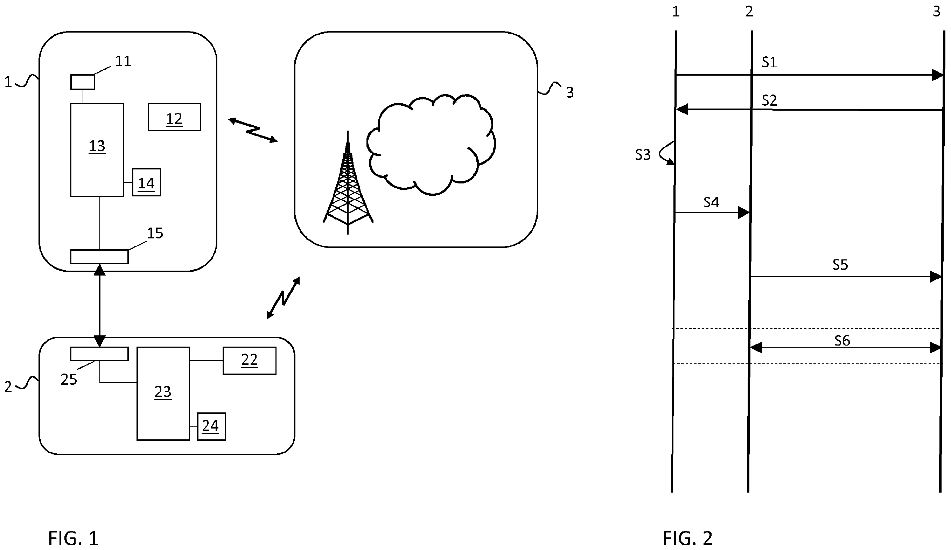

FIG. 1 is a schematic illustration of a system comprising a first user device 1 and a second user device 2 in combination with a telecommunications network 3.

First user device 1 comprises a USIM 11 authorizing the first user device 1 to wirelessly access the telecommunications network 3 using baseband processor 12. First user device 1 further comprises a general processor 13 and a storage 14.

Second user device 2 comprises a baseband processor 22, a general processor 23 and a storage 24. The second user device may not contain a USIM.

First user device 1 comprises a direct communication interface 15 and second user device 2 comprises a direct communication interface 25 over which a direct connection can be established. The direct connection is a one-to-one connection independent from the telecommunications network 3. Examples include LTE direct, Bluetooth, infrared etc.. Processors 13, 23 may run a discovery protocol detecting the presence of other devices capable of establishing such a direct connection.

By virtue of the information in the USIM 11, the first user device is a device that may on its own access the telecommunications network 3 and exchange user data over the telecommunications network 3. The USIM 11 typically contains subscription information, such as an IMSI and a master key enabling the telecommunications network 3 to recognize the first user device 1 as a device with a subscription to subsequently provide the first user device 1 with the necessary information, such as keys or information from which key(s) can be derived. Examples of such devices include cellular telephones, tablet computer, laptops etc.

The second user device 2 does not contain a USIM (or cannot or does not want to use the USIM). However, similarly to the first user device 1, the second user device 2 is equipped with a baseband processor 22 that would, when it would have access to credentials, enable the second user device 2 to access the telecommunications network 3. It is expected that in the upcoming years, devices such as the second device 2 will find their way into households. Such devices may include devices presently enabled to access wifi access points, such as tablets, phones, game consoles, camera's, navigations systems, car keys, medical devices, watches, eyeglasses comprising cameras, electronic displays, etc. The second user device 2 preferably also is a portable device. The second device 2 may also comprise a machine or a household appliance.

FIG. 2 is a time diagram illustrating an embodiment of provisioning the second user device 2 with credentials to enable access and data exchange over the telecommunications network 3 for the second user device 2 without originally possessing such credentials. The credentials comprise or consist of one or more (temporary) identifiers under which a device is known in the network and one or more keys or derived keys.

In step S1, first user device 1 contacts the telecommunications network 3 in a manner known as such using some information stored in the USIM 11 and obtains information from the network 3 in step S2. The information may e.g. contain a temporary identifier (T-IMSI) and information from which, in combination with the master key stored in USIM 11, one or more keys may be derived, step S3. The T-IMSI and the derived keys constitute the credentials that the first user device 1 may use to access the telecommunication network 3 for exchanging data over the telecommunications network 3. The credentials may be stored in memory 14.

Then, in step S4, the first user device 1 provides some or all of the credentials to the second user device 2. Preferably, these credentials are transferred from the first user device 1 to the second user device 2 over the direct connection established between direct communication interfaces 15,25. The second user device may store the received credentials in memory 24.

Then, in step S5, the second user device 2 accesses the network 3 using baseband processor 22 and the credentials stored in memory 24 as obtained from the first user device 1.

In step S6, the second user device 2 is now enabled to exchange user data over the telecommunications network 3.

In one disclosed aspect, however, the first user device 1 stays in control over the data exchange of the second user device 2. In particular, this control is independent of the second user device 2, such that the second user device 2 cannot frustrate the control. This control, performed either solely by the first user device or by cooperation of the first user device 1 and the network 3, is illustrated schematically by the dashed lines around step S6. The control may be time-dependent, i.e. the first user device may inform the network that the data exchange of the second user device 2 should no longer be possible or continued after a particular moment in time derived from the time information.

The control scope by the first user device 1 depends on the credentials provided to the second user device. For example, the first user device 1 may inform the network 3 that the temporary identifier T-IMSI provided to the second user device 2 should no longer be considered a valid identifier. Another example may be to initiate a key refresh procedure for a key under control of the first user device 1 such that another key provided to the second user device 2 that is derived from the key under control of the first user device 1 becomes invalid.

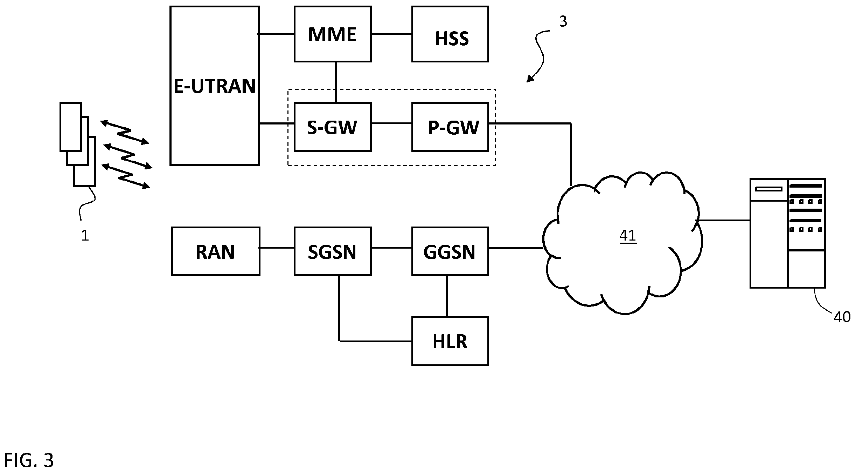

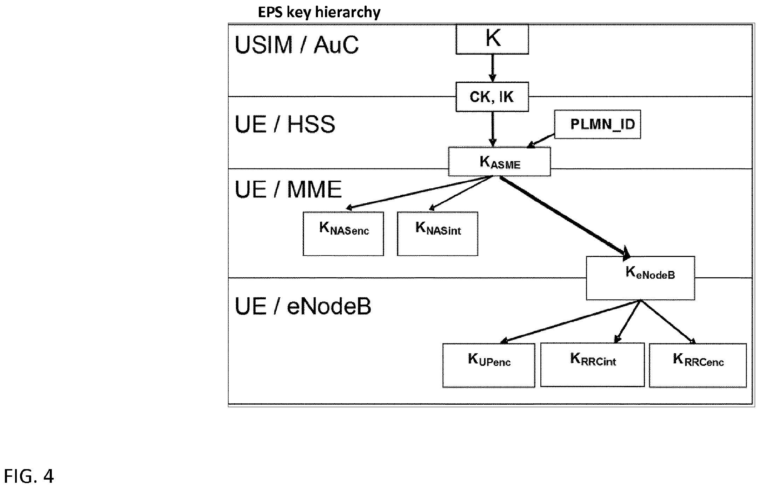

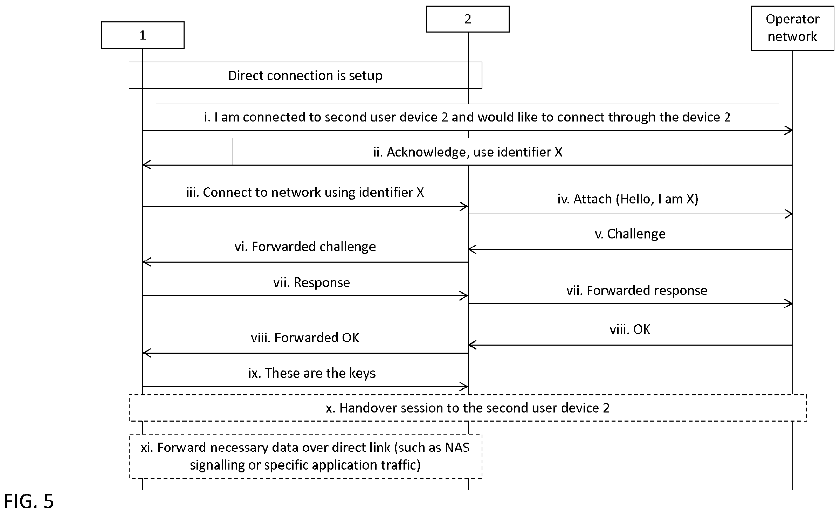

Before providing various more detailed examples with reference to FIGS. 5-12, a brief description of a Long Term Evolution (LTE) network 3 will be provided with reference to FIG. 3 and of the various keys used in such a network with reference to FIG. 4.

FIG. 3 is a schematic illustration of a telecommunications network 3.

The upper branch in FIG. 3 represents a next generation network, commonly indicated as Long Term Evolution (LTE) or Evolved Packet System (EPS). Such a network comprises a PDN Gateway (P-GW) and a Serving Gateway (S-GW). The E-UTRAN of the EPS comprises evolved NodeBs (eNodeBs or eNBs) providing wireless access for a device 2 that is connected to the S-GW via a packet network. The S-GW is connected to a Home Subscriber Server HSS and a Mobility Management Entity MME for signalling purposes. The HSS may include a subscription profile repository SPR containing subscription information of user device 1.

Further information of the general architecture of a EPS network can be found in 3GPP TS 23.401.

The lower branch of FIG. 3 represents a GPRS or UMTS network comprising a Gateway GPRS Support Node (GGSN), a Serving GPRS Support Node (SGSN) and a Radio Access Network (RAN or UTRAN). For a GSM/EDGE radio access network (GERAN), the RAN comprises a Base Station Controller (BSC) connected to a plurality of Base (Transceiver) Stations (BSs, BTSs), both not shown. For a UMTS radio access network (UTRAN), the RAN comprises a Radio Network Controller (RNC) connected to a plurality of NodeBs), also not shown. The GGSN and the SGSN are conventionally connected to a Home Location Register (HLR) or Home Subscriber Server (HSS) that may contain subscription information of the user devices 1.

The telecommunications network 3 enables establishing connections for user data, also referred to as data sessions or as PDP Contexts, between a server system 40 and a user device 1 over a packet data network 41, wherein access of the user device 1 to the telecommunications network 3 is wireless.

Fig. 4 is a schematic illustration of a key hierarchy for an LTE telecommunications network.

A key, K_{ASME}, is generated in both the first user device and the network (more specifically, the authentication centre AuC) from integrity key IK, cipher key CK and a serving network id in a known manner. From the generated key K_{ASME}, keys for the protection of NAS signalling, RRC signalling and user plane communication on the radio interface are generated, as illustrated in Fig. 4.

The NAS keys K_{NASenc} en K_{NASint} used for encryption of session management between the first user device and the MME. Keys K_{UPenc}, K_{RRCint}, en K_{RRCenc} are used at the radio interface between the UE and the base station eNodeB. These keys are derived using an intermediate key K_{eNB}. The K_{RRC} keys are access stratum keys used for the radio resources signalling. User plane key K_{UP} is used for encryption of the (user plane) traffic on the radio interface.

Control of the data exchange of the second user device may be based on any of the keys obtained by the first user device. For example, if the user plane key K_{UP} has been provided to the second user device, control can be exercised by the first user device through initiating a key refresh for either one of the NAS or RRC keys. Similarly, if the RRC keys or the NAS keys have been provided to the second user device, control can be performed on the basis of the user plane and/or NAS keys or on the basis of the user plane and/or RRC keys, respectively. If key K_{ASME} is provided to the second user device, the first user device may perform control by requesting the network to initiate a new AKA.

Similar control options exist for other types of networks, including the UTMS and GPRS networks as discussed briefly with reference to Fig. 3.

Some embodiments for the LTE network will now be described in further detail with reference to Figs. 5-12.

In Fig. 5, it is assumed that the first user device 1 and second user device 2 have been paired at some time *t₀* and have setup a direct connection. A session may be going on between the first user device 1 and the network. At some later time *t₁* = *t₀* + d*t*, the first user device 1 would like to go into battery saving mode or forward an ongoing call to the nearby second user device 2. In step i), the first user device 1 informs the network that it would like to transfer the call / session to the second user device. In step ii), the network provides the first user device 1 with a temporary identifier X and a key or key identifier (an identifier signaling which key to use or which information to use to derive a key) to be used by the second user device 2. In step iii), the first user device 1 provides the second user device 2 with just the identifier X over the direct link and the identifier of the network it can reach. In step iv), the second user device 2 then connects to the network using the identifier X.

In step v), the network initiates an AKA (with a challenge). This could be any standardized LTE AKA. The second user device 2 forwards the challenge to the first user device 1 in step vi). In step vii), the first user device 1 calculates the response and sends it to the second user device 2 which forwards it to the network. The network compares the response to the expected response and provides an OK to the second user device 2 which forwards it to the first user device 1 in step viii).

In step ix), the first user device 1 provides a set of keys to the second user device 2. These keys may e.g. contain the user plane key K_{UP} and the radio resource key K_{RRC}. With these two keys, the second user device 2 can decrypt and insert the user plane traffic and behave properly on the radio channel as long as it remains in reach of one eNodeB in the E-UTRAN. For hand-overs, etc. (which require a key on a higher level) the second user device 2 consults the first user device 1 for all the procedures. For session management, which require non-access stratus keys K_{NAS}, the second user device 2 also relies on the first user device 1. In this manner, the first user device remains in control of the connection and can quickly disable the second user device if necessary or desired.

Optionally, in case a user data session (e.g. call, video stream) was open between the first user device 1 and the network at this moment, the first user device 1 or an entity within the network may initiate a hand-over from the first user device 1 to the second user device 2 as shown in step x). At the network side, this requires that the session is rerouted to the second user device 2 (i.e. changing the address of the destination traffic) and encrypted with the new keys. At the first user device 1, application specific information is forwarded to the second user device 2 as shown in step xi). This means that the second user device 2 is informed about what application traffic is to be expected (e.g. VoIP traffic, video stream, Facebook traffic) and what traffic should be handled in the second user device 2 (e.g. VoIP and video) and what should be forwarded to the first user device 1 (e.g. Facebook and email retrieval). Such a mechanism is easily implemented on the TCP/IP layer, where the destination port numbers correspond to certain applications. The second user device 2 can then selectively forward traffic. The second user device 2 may forward at least the NAS signaling to the first user device 1 (the second user device 2 itself has no NAS keys) likely some application traffic is forwarded as well. The connection can be terminated by initiating a key refresh procedure, thereby invalidating the keys of the second user device 2.

It is noted that in the embodiment of Fig. 5, even before the first user device 1 and the second user device 2 have established a direct connection, the first user device 1 could already have requested and performed an AKA and store this information. The first user device 1 may now inform a second user device 2 to become a slave device on its behalf. In this manner, fewer steps may be necessary to set up the connection.

The keys provided to the second user device 2 do not enable a handover for the second user device 2 to a network with a different radio access technology (inter-RAT handover). If the second user device 2 has keys for an LTE network, these keys cannot be used for a UMTS network or for a GSM network. However, such handovers may still be performed within the mechanism as presented in this disclosure.

In a first solution, the second user device 2 may obtain all credentials from the first user device 1 necessary for a full UMTS or GSM connection. The second user device 2 detects that LTE coverage is ending and that UMTS or GSM are available in a manner known as such. The second user device 2 initiates an attach to the UMTS/GSM network. The network then initiates an AKA, which the second user device 2 forwards to the first user device 1. The first user device 1 and the network derive new keys to be used in the UMTS (two keys) or GSM (one key) case. The direct connection between the first user device 1 and the second user device 2 may or may not remain. The first user device 1 may no longer have a signaling path to the network in this case. However, the first user device 1 itself may still be allowed to connect to the LTE network (if possible) and the session signaling could then be protected using the same keys that were used before. In order to have both the first user device 1 and the second user device 2 connected to different networks in this manner, extra signaling between the core network components of the LTE network (to which the first user device 1 is connected) and the UMTS network (to which the second user device 2 may be connected) may be arranged for.

In a second solution, if a handover is required, the direction of the traffic between the first user device 1 and the second user device 2 may be reversed. The direct connection between the first user device 1 and the second user device 2 is kept and the first user device 1 connects to the UMTS or GSM network. The first user device 1 receives the user data from the second user device 2 and forwards the user data to the network. An advantage of this second solution is that even if the handover cannot be performed by second user device 2, the exchange of user data of second user device 2 can continue via first user device 1.

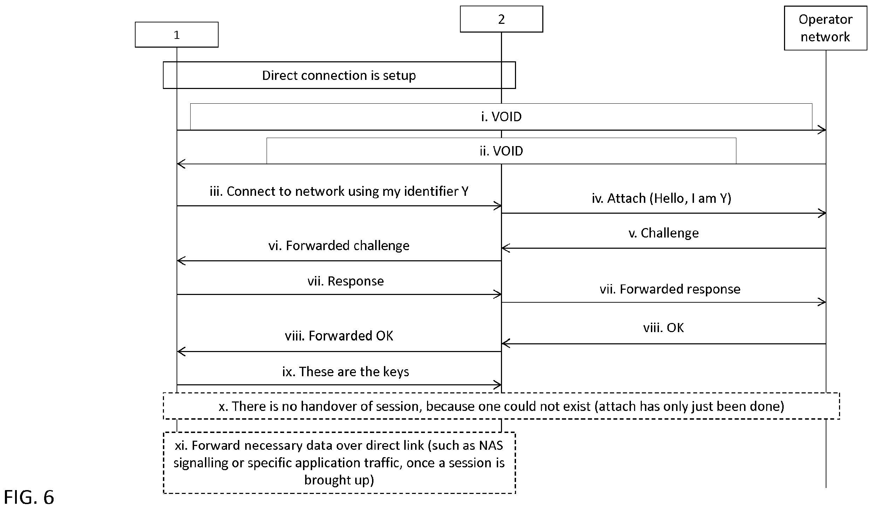

In the embodiment of Fig. 6, the network is not informed about the transfer of a part of the credentials from the first user device 1 to the second user device 2. The advantage of the embodiment of Fig. 6 is that no network support is required for a connection of the second user device with the network.

The first user device 1 and second user device 2 are paired at some time *t₀* and have established a direct connection. At some later time *t₁ = t₀* + dt, the first user device 1 would like to go into battery saving mode or let the second user device 2 handle incoming traffic on its behalf. This can be done if no session is currently active.

In comparison with the embodiment of Fig. 5, the network does not need to be informed such that steps i) and ii) of Fig. 5 wherein the network was informed can be omitted.

In step iii), the first user device 1 provides the second user device 2 with its own identifier Y over the direct link and the identifier of the network it can reach. In step iv), the second user device 2 then connects to the network going using the identifier Y of the first user device.

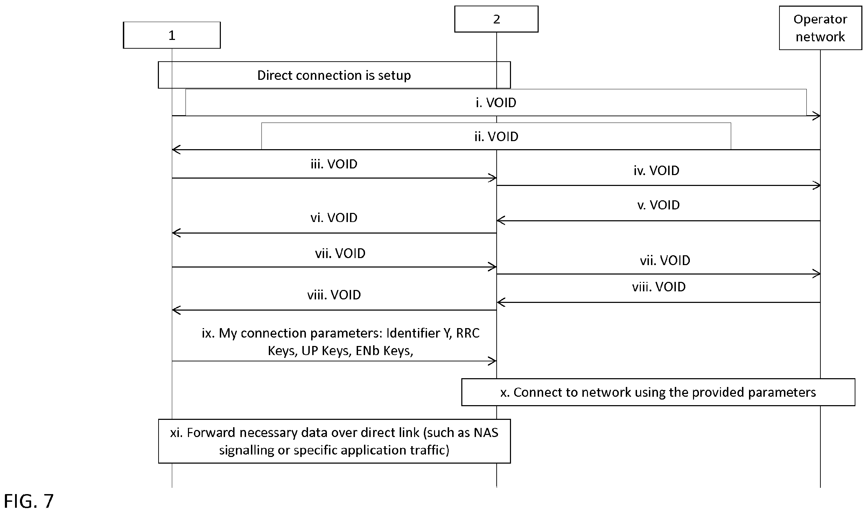

In step v), the network initiates an AKA (with a challenge). This could be any standardized LTE AKA. In step vi), the second user device 2 forwards the challenge to first user device 1. The first user device 1 calculates the response and sends it to the second user device 2 which forwards it to the network in step vii). The network compares the response to the expected response and provides an OK to the second user device 2 which forwards it to the first user device 1 in step viii). Steps v)-viii) may be omitted in cases wherein security contexts can be stored, such as in LTE. The keys are stored in the network and no full AKA is necessary. In that case, the steps 5-8 can be omitted. Such an example is provided in Fig. 7.

In step ix), the first user device 1 provides a set of keys to the second user device 2. These keys may e.g. contain the user plane key K_{UP} and the radio resource key K_{RRC}. With these two keys, the second user device 2 can decrypt and insert the user plane traffic and behave properly on the radio channel as long as it remains in reach of one eNodeB in the E-UTRAN.

For hand-overs, etc (which require a key on a higher level) the second user device 2 may consult the first user device 1 for all the procedures. For session management, which require non-access stratus keys K_{NAS}, the second user device 2 also relies on the first user device 1. In this manner, the first user device 1 remains in control of the connection and can quickly disable the second user device 2 if necessary or desired.

The first user device 1 may indicate whether there is some application traffic that it would like to receive and request that the second user device 2 forwards it to the first user device 1. The second user device 2 may forward at least the NAS signaling to the first user device 1 (the second user device 2 itself has not obtained the NAS keys). The connection may be terminated by the first user device 1 by initiating a key refresh procedure, thereby invalidating the keys provided to the second user device 2.

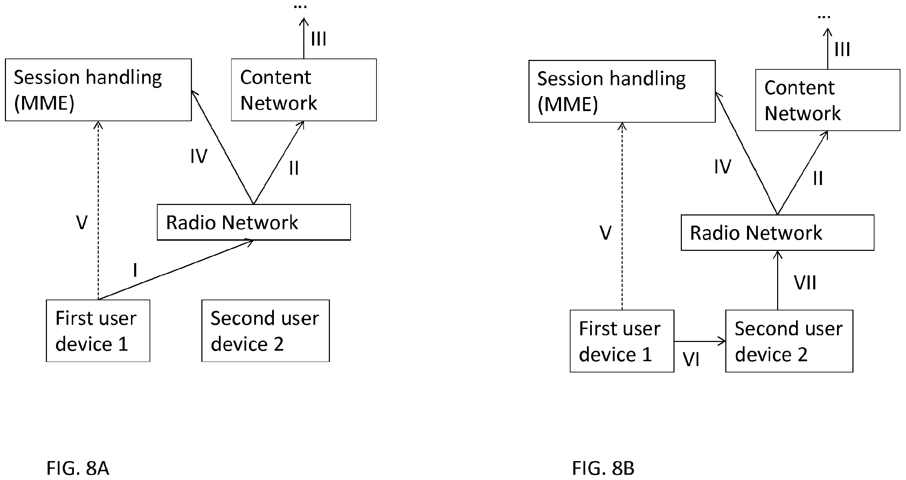

Figs. 8A and 8B schematically illustrate in a different representation than Figs. 5-7 how control is maintained with the first user device 1 while providing a part of the credential information to the second user device 2.

Fig. 8A illustrates the case prior to handing over some of the credential from the first user device 1 to the second user device 2. User data is transferred from the first user device 1 over a connection I to the radio network and further to a content network over connection II to a content network and then further over connection III, if necessary. Signaling traffic is conveyed over connections I and IV for session handling to the MME making up a logical connection V illustrated by the dashed arrow.

Fig. 8B is the illustration after transferring a part of the credentials to the second user device 2 over connection VI. User data is transferred from the second user device 2 over connection VII (and maybe over connection VI) to the radio network and then further over connections II and III. Signaling traffic is now over connections VI, VII and IV, still making up for logical connection V. Accordingly, control remains with the first user device 1 since the first user device 1 can decide to render the credentials provided to the second user device 2 invalid and stop the session. If the direct connection between the first user device 1 and the second user device 2 is blocked, for some reason, the connection of the second user device 2 will fail as soon as a new key should be derived or when the network terminates the connection e.g. because session management errors occur.

The amount and/or type of credentials provided from the first user device 1 to the second user device 2 can vary from only few to the complete set.

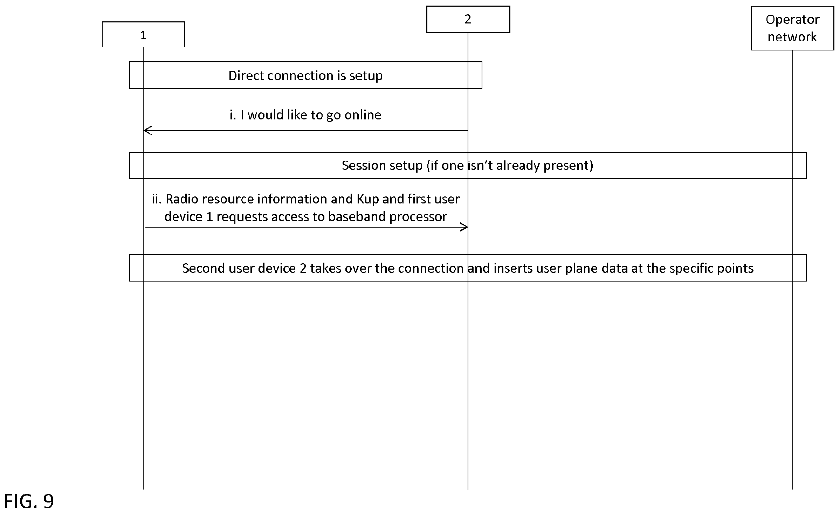

In the embodiment of Fig. 9, only the user plane key K_{UP} is provided to the second user device 2.

When proximity is detected by the first user device 1 and the second user device 2, a direct connection is established. In step i), the second user device 2 requests a data session to the network from the first user device 1. The first user device 1 establishes a session with the network if such a session is not yet in existence. In step ii), the first user device informs the second user device 2 that it would like to talk directly to its base band processor 22 (see Fig. 1). Additionally, the first user device 1 informs the second user device 2 how to insert the user data and provides the user plane key K_{UP} to the second user device 2. At a specified point in time, the second user device 2 takes over the radio connection and the first user device 1 talks to the base band processor directly and informs the second user device 2 where to insert user data traffic.

Because the first user device 1 talks directly to the base band processor 22 of the second user device 2, the first user device 1 does all the signaling (access stratum and non-access stratum). The second user device 2 inserts the user plane traffic straight away. Handovers to GSM or UMTS require that either the first user device 1 gives the newly derived keys to the second user device 2 and lets the second user device 2 handle the session or that the first user device 1 handles all the traffic itself and that the user data flows over the direct connection (so from the second user device 2 to the first user device 1 to the network).

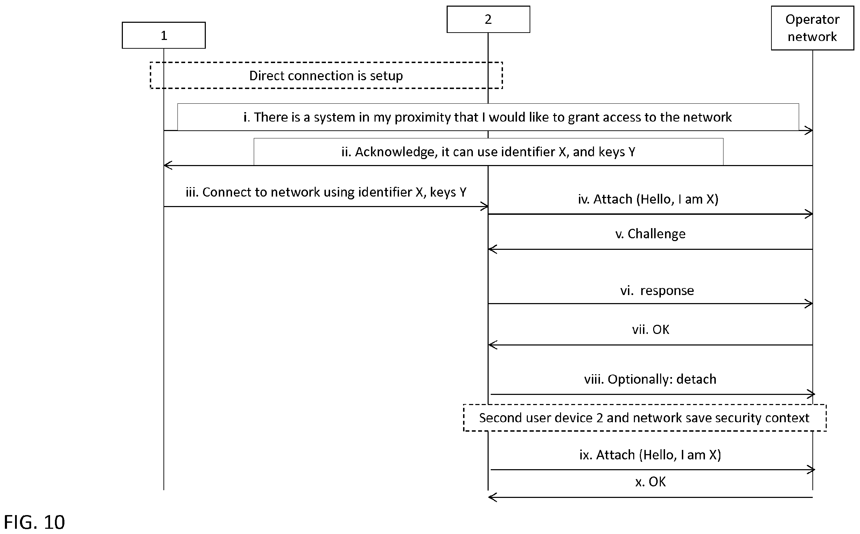

Instead of only providing a single key to the second user device 2, as described with reference to Fig. 9, the complete set of obtained credentials may be provided from the first user device 1 to the second user device 2. Control by the first user device 1 is obtained by informing the network that one or more of the credentials provided to the second user device 2 should no longer be accepted. Various examples of such an embodiment will now be described with reference to Figs. 10-12.

In FIG. 10 it is assumed that the first user device 1 and the second user device 2 are nearby and have paired at some time *t₀* and have established a direct connection. At some later time *t₁* = *t₀* + d*t*, the first user device 1 would like to go into battery saving mode or forward an ongoing call to the nearby second user device 2. The first user device 1 informs the network in step i) that it would like to connect through the second user device 2. The network provides the first user device 1 with a full set of credentials comprising a temporary identifier X and a key or keys or key identifier(s) Y in step ii). The first user device 1 provides the second user device 2 with the identifier X and the key and the identifier of the network it can reach in step iii).

The second user device 2 then connects to the network in step iv) using the credentials received from the first user device 1 and performs a full AKA, steps v)- vii), in a known manner. The second user device 2 has the complete set of credentials and can perform all management functions on its own. The first user device 1 may hand over a session to the second user device 2. Control, however, may still be exercised from the first user device 1, knowing the credentials of the second user device 2, by connecting to the network and signaling, using information relating to the credentials provided to the second user device 2, that the second user device 2 should be connected. The second user device 2 may save the security context when it detaches from the network (step viii)) and attach again (steps ix) and x)) at a later time as long as the first user device 1 has not instructed the network otherwise.

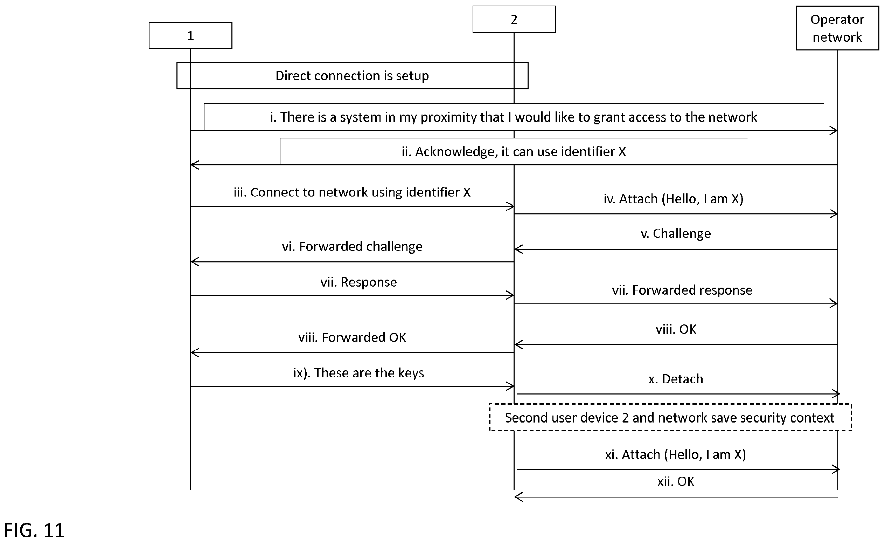

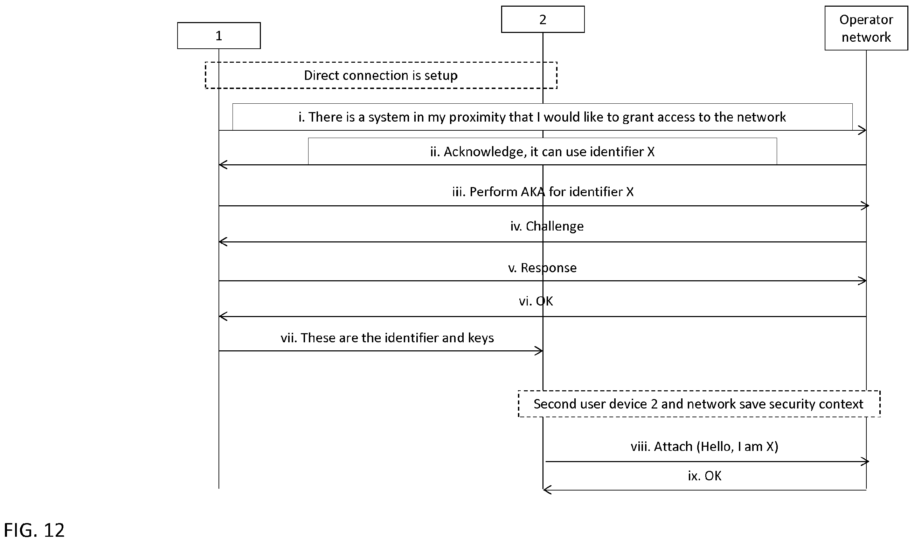

Further embodiments are disclosed in Figs. 11 and 12. In both embodiments, the first user device 1 and second user device 2 device are paired at some time *t₀* and have setup a direct connection. At some later time *t₁* = *t₀* + d*t*, the first user device 1 would like to go into battery saving mode or forward an ongoing call to the nearby second user device 2. The first user device 1 informs the network that it would like to connect through the second user device 2 device in step i). The network provides the first user device 1 device with an identifier X in step ii). Then, in steps iii)- viii) for Fig. 11 and in steps iii)-vi) for Fig. 12 an AKA is performed by the first user device 1 (either relayed through the second user device as in Fig. 11) or by the first user device 1 itself (as illustrated in Fig. 12).

When the keys are obtained, the first user device 1 provides the keys to the second user device 2 in step ix) (Fig. 11) and in step vii) (Fig. 12). In the example of Fig. 12, also the identifier is provided to the second user device 2. Again, by saving the security context, the second user device 2 may detach and attach again as long as the first user device 1 has not informed the network that the second user device 2 should not be allowed to connect anymore.

In an alternative to the above solutions, the first user device 1 may obtain the credentials independent of whether it has a connection to a second user device 2. The first user device 1 could for example obtain multiple full credential sets in advance and use these whenever needed. Similarly, the network and first user device 1 could agree a shared secret / key that the first user device 1 could use for deriving new sets of credentials in the first user device 1. In that case, the shared secret will provide proof of origin of the set of credentials (only the network and first user device 1 know the shared secret so any third device should have got it from the first user device 1). Such information could also be contained in a certificate which could be provided by the first user device 1 to the second user device 2 upon attach of the second user device 2.

The second user device 2 may be instructed to listen for the identifier that has been given to it before in order to setup a direct connection between the second user device 2 and first user device 1 (the first user device 1 would then be broadcasting this identifier). When the first user device 1 and the second user device 2 find themselves at a greater distance, the broadcast by the first user device 1 could propagate through the operator network and the second user device 2 device could connect to the cellular network (or only the radio / access network) and set up a device-to-device connection. An additional requirement would be that the network knows where to page the second user device 2, either because it has a static location, or because the second user device 2 device keeps the network or the user device 1 informed.

Advantageously, there is no need for a separate subscription for every device and all devices could be managed from one device (or multiple in case it is a family owned device). So, if a household has four members and four subscriptions, there are four devices potentially capable of controlling the in-house entertainment system, photo camera or game console.

For solutions where a full credential set is provided to the second user device 2, there is no need for special arrangements for changing coverage. Moving between LTE, UMTS and GSM coverage is seamlessly possible because the set is full and therefore all standard procedures for hand-overs apply.

In some of the disclosed embodiments where not all information is provided to the second user device 2, the first user device 1 informs the second user device 2 about the channels (e.g. frequencies) that are to be used and the time slots that are available for sending information. The second user device 2 then has all information to be able to effectively eavesdrop on the connection it is relaying or repeating.

In some embodiments, the control by the first user device 1 is performed by keeping the signaling on the first user device 1 and only working with the user data on the second user device 2. That way, the first user device 1 can effectively control by initiating a key refresh procedure. Another point of added security is that the session signaling remains between the first user device 1 and the network. Thereby, the first user device 1 can control the properties of the session, such as maximum allowed throughput and QoS aspects. The first user device 1 retains (some) control of what is allowed for the session (no large downloads, e.g.).

The disclosed control mechanisms can be used for privacy enhancing technology. For example, medical devices, such as a pacemaker, a blood pressure monitoring device, blood sugar level monitoring device, etc. could use this technology to push information to the network. In this case, the health care device (a second user device) could not have a subscription, but it is paired with a phone (a first user device). At some point, the health care device would like to send information to the health care provider. The medical device then pages the phone (to see whether it is nearby). If the phone receives the paging message it replies and a direct connection is set up. Then, the medical device indicates that it would like to connect to the network to send some data. The phone then can decide whether to allow or not and whether or not to allow the device to send the information.

As mentioned previously, the disclosed control mechanism has been envisaged for a variety of networks, including LTE (4G) networks and UMTS networks. At present, a next generation network intended to succeed the LTE network is under development. One aspect distinguishing the next generation network from the LTE network is the further separation of user plane data and signaling plane data.

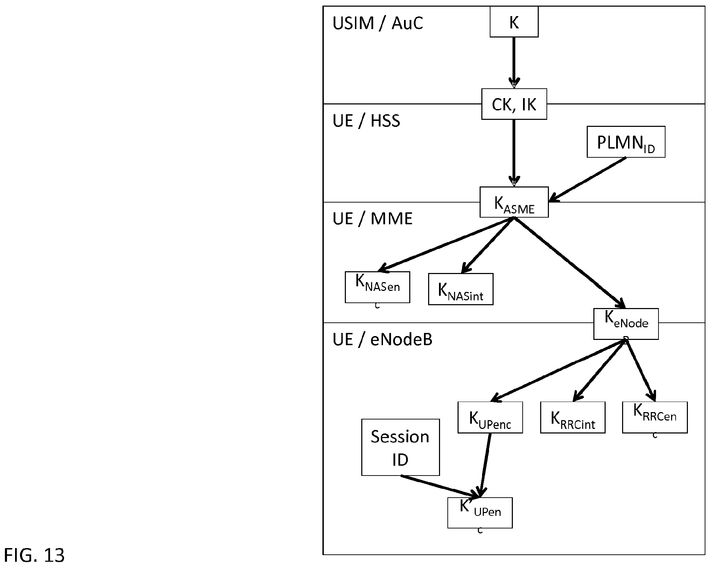

Fig. 13 represents an envisioned key hierarchy for a next generation network resembling the EPS key hierarchy. The key hierarchy has large similarity to the LTE key hierarchy as depicted in Fig. 4, but has a further key division for the UE-eNodeB radio interface. In particular, the user plane key K_{UP} may be assigned to a single eNodeB and a single data session by using an intermediate key (e.g. a session identifier) from which multiple user plane keys K'_{UPenc} are derived.

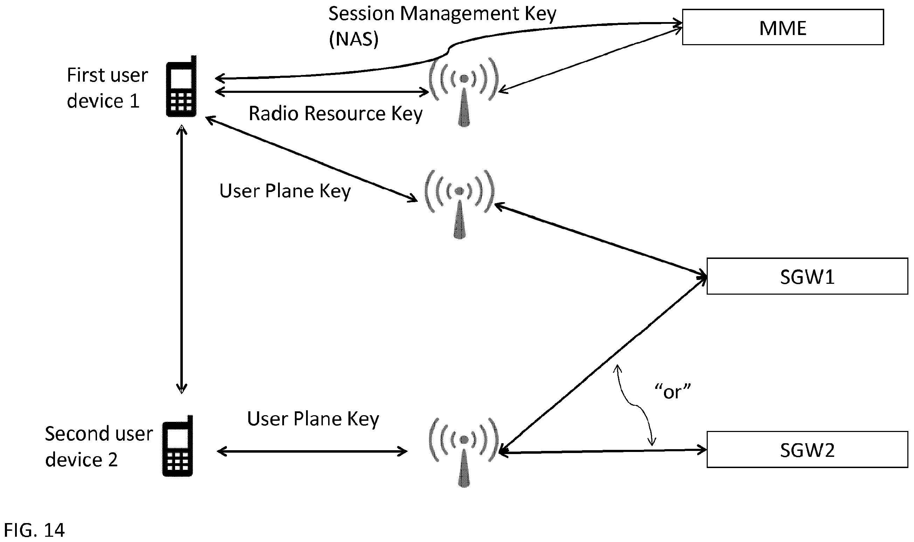

This enables the first user device 1 to have a direct (physical) signaling connection with the network and the second user device 2 to have a direct (physical) user data connection as depicted in Fig. 14. The signaling connection may comprise a low bandwidth channel and the user data connection may comprise a channel with a higher bandwidth. Control of the user data exchange of the second user device 2 may be performed by the first user device 1 manipulating the signaling information or the transmission thereof.

The direct connection between the first user device 1 and the second user device 2 enables the first user device 1 to perform the signaling for the resources and the session and to inform the second device 2 about the timing for the user data transmission and other events on the radio path. If a session identifier is used for deriving the user plane keys K_{UP}, both the first user device 1 and the second user device 2 may have a session with the network. The first user device 1 may then exercise dual session management control functions, both for itself and for the second user device 2. In Fig. 14, the first user device 1 only provided the user plane key to the second user device 2.

The enhanced separation of the user plane and signaling plane makes it possible to use different identifiers for the user plane and the signaling plane. For example, identifiers may be derived from the TMSI (used for the signaling) and the session identifier using a hash function. This is also a scalable solution since every data connection obtains an associated identifier in this manner.

It is noted that the method has been described in terms of steps to be performed, but it is not to be construed that the steps described must be performed in the exact order described and/or one after another. One skilled in the art may envision to change the order of the steps and/or to perform steps in parallel to achieve equivalent technical results.

With some modifications, one skilled in the art may extend the embodiments described herein to other architectures, networks, or technologies.

Various embodiments of the invention may be implemented as a program product for use with a computer system or a processor, where the program(s) of the program product define functions of the embodiments (including the methods described herein). In one embodiment, the program(s) can be contained on a variety of non-transitory computer-readable storage media (generally referred to as "storage"), where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored.

## Claims

1. A method for controlling, by a first user device, user data exchange of a second user device over a telecommunications network, wherein the first user device and the second user device are configured for wirelessly connecting to the telecommunications network, the method comprising the steps of:
- obtaining a set of credentials by the first user device, the set of credentials comprising an identifier and a plurality of signal transmission keys for signal transmission over the telecommunications network;
- providing at least a portion of the set of credentials from the first user device to the second user device to enable the second user device to exchange user data over the telecommunications network;
**characterised by**:
- aborting user data exchange of the second user device over the telecommunications network by means of a control action of the first user device, the control action being performed with respect to the credentials obtained by the first user device and provided to the second user device, wherein the control action of the first user device comprises instructing the telecommunications network to invalidate the identifier if the identifier has been provided to the second user device and/or one or more of the keys provided to the second user device.

2. The method according to claim 1, further comprising the step of maintaining signalling between the first user device and the telecommunications network for the user data exchange of the second user device over the telecommunications network and wherein the control action by the first user device comprises manipulating the signalling at the first user device.

3. The method according to claim 2, wherein the telecommunications network comprises an LTE network and the set of credentials obtained by the first user device includes one or more non-access stratum (NAS) keys, the method comprising the steps of:
- omitting one or more of the NAS keys from the portion of the credentials provided to the second user device;
- aborting user data exchange of the second user device by the control action, the control action of the first user device comprising one of:
- transmitting a NAS message Detach Request to the telecommunications network;
- transmitting an authentication failure message upon receiving a challenge from the telecommunications network during a Tracking Area Update (TAU) or an Authentication and Key Agreement procedure.

4. The method according to claim 1, further comprising the steps of:
- applying a first identifier from the telecommunication network enabling the first user device to exchange user data over the telecommunications network;
- requesting a second identifier from the telecommunications network;
- including the second identifier in the set of credentials to be provided to the second user device to enable the second user device to exchange user data over the telecommunications network.

5. The method according to claim 1, comprising the step of receiving an identifier enabling the first user device to exchange user data over the telecommunications network and providing this identifier to the second user device enabling the second user device to exchange user data over the telecommunications network.

6. The method according to one or more of the preceding claims, further comprising the step of establishing a direct connection, such as an LTE direct connection or a Bluetooth connection, between the first user device and the second user device for at least providing the at least portion of the set of credentials to the second user device.

7. The method according to one or more of the preceding claims, wherein the first user device obtains one or more sets of credentials in advance and provides one or more of the sets of credentials to one or more second user devices at a later time.

8. The method according to one or more of the preceding claims, comprising the steps by the first user device of:
- providing the identifier to the second device;
- receiving information from the telecommunications network via the second user device;
- transmitting one or more signal transmission keys to the second device after receiving the information from the second device.

9. A computer program comprising software code portions configured for, when executed on a computer system, performing the method according to one or more of the claims 1-8.

10. A non-transitory computer program medium comprising the computer program according to claim 9.

11. A first user device configured for executing the method according to claims 1-8 and comprising circuitry programmed with computer code for controlling user data exchange by the second user device, wherein the computer code, when executed by the circuitry, performs:
- obtaining a set of credentials, the set of credentials comprising an identifier and a plurality of signal transmission keys for signal transmission over the telecommunications network;
- providing at least a portion of the set of credentials to the second user device to enable the second user device to exchange user data over the telecommunications network;
**characterised by**:
- aborting user data exchange of the second user device over the telecommunications network by means of a control action, the control action being performed with respect to the obtained credentials provided to the second user device, wherein the control action of the first user device comprises instructing the telecommunications network to invalidate the identifier if the identifier has been provided to the second user device and/or one or more of the keys provided to the second user device.

## Patentansprüche

1. Verfahren zum Steuern durch eine erste Benutzervorrichtung von Benutzerdatenaustausch einer zweiten Benutzervorrichtung über ein Telekommunikationsnetz, wobei die erste Benutzervorrichtung und die zweite Benutzervorrichtung für drahtloses Verbinden mit dem Telekommunikationsnetz ausgebildet sind, wobei das Verfahren die folgenden Schritte umfasst:
- Erlangen eines Satzes von Berechtigungsnachweisen durch die erste Benutzervorrichtung, wobei der Satz von Berechtigungsnachweisen eine Kennung und eine Mehrzahl von Signalübertragungsschlüsseln für Signalübertragung über das Telekommunikationsnetz umfasst;
- Bereitstellen mindestens eines Teils des Satzes von Berechtigungsnachweisen von der ersten Benutzervorrichtung an die zweite Benutzervorrichtung, um zu ermöglichen, dass die zweite Benutzervorrichtung Benutzerdaten über das Telekommunikationsnetz austauscht; **gekennzeichnet durch**:
- Abbrechen des Benutzerdatenaustauschs der zweiten Benutzervorrichtung über das Telekommunikationsnetz mittels einer Steueraktion der ersten Benutzervorrichtung, wobei die Steueraktion bezüglich der Berechtigungsnachweise durchgeführt wird, die von der ersten Benutzervorrichtung erlangt werden und an die zweite Benutzervorrichtung bereitgestellt werden,
wobei die Steueraktion der ersten Benutzervorrichtung das Anweisen des Telekommunikationsnetzes umfasst, die Kennung ungültig zu machen, falls die Kennung der zweiten Benutzervorrichtung bereitgestellt wurde, und/oder einen oder mehrere der der zweiten Benutzervorrichtung bereitgestellten Schlüssel.

2. Verfahren nach Anspruch 1, das ferner den Schritt des Aufrechterhaltens des Signalisierens zwischen der ersten Benutzervorrichtung und dem Telekommunikationsnetz für den Benutzerdatenaustausch der zweiten Benutzervorrichtung über das Telekommunikationsnetz umfasst, und wobei die Steueraktion durch die erste Benutzervorrichtung das Manipulieren der Signalisierung an der ersten Benutzervorrichtung umfasst.

3. Verfahren nach Anspruch 2, wobei das Telekommunikationsnetz ein LTE-Netz umfasst und der Satz von Berechtigungsnachweisen, der durch die erste Benutzervorrichtung erlangt wird, einen oder mehrere Nichtzugangsschicht(NAS, Non Access Stratum)-Schlüssel enthält, wobei das Verfahren die folgenden Schritte umfasst:
- Auslassen eines oder mehrerer der NAS-Schlüssel aus dem Teil der Berechtigungsnachweise, der der zweiten Benutzervorrichtung bereitgestellt wird;
- Abbrechen des Benutzerdatenaustauschs der zweiten Benutzervorrichtung durch die Steueraktion, wobei die Steueraktion der ersten Benutzervorrichtung eines umfasst von:
- Übertragen einer Ablöseanfrage (Detach Request) einer NAS-Nachricht an das Telekommunikationsnetz;
- Übertragen einer Authentifizierungsfehlernachricht bei Empfangen einer Herausforderung von dem Telekommunikationsnetz während eines Tracking Area Update (TAU) oder einer Prozedur für Authentifizierung und Schlüsselvereinbarung (Authentication and Key Agreement).

4. Verfahren nach Anspruch 1, das ferner die folgenden Schritte umfasst:
- Anwenden einer ersten Kennung von dem Telekommunikationsnetz, die der ersten Benutzervorrichtung ermöglicht, Benutzerdaten über das Telekommunikationsnetz auszutauschen;
- Anfragen einer zweiten Kennung von dem Telekommunikationsnetz;
- Aufnehmen der zweiten Kennung in den Satz von Berechtigungsnachweisen, die der zweiten Benutzervorrichtung bereitzustellen sind, um zu ermöglichen, dass die zweite Benutzervorrichtung Benutzerdaten über das Telekommunikationsnetz austauscht.

5. Verfahren nach Anspruch 1, das den Schritt des Empfangens einer Kennung, die ermöglicht, dass die erste Benutzervorrichtung Benutzerdaten über das Telekommunikationsnetz austauscht, umfasst und des Bereitstellens dieser Kennung an die zweite Benutzervorrichtung, ermöglichend, dass die zweite Benutzervorrichtung Benutzerdaten über das Telekommunikationsnetz austauscht.

6. Verfahren nach einem oder mehreren der vorhergehenden Ansprüche, ferner umfassend den Schritt des Herstellens einer direkten Verbindung, wie zum Beispiel einer LTE-Direktverbindung oder einer Bluetooth-Verbindung, zwischen der ersten Benutzervorrichtung und der zweiten Benutzervorrichtung für mindestens das Bereitstellen des mindestens einen Teils des Satzes von Berechtigungsnachweisen an die zweite Benutzervorrichtung.

7. Verfahren nach einem oder mehreren der vorhergehenden Ansprüche, wobei die erste Benutzervorrichtung einen oder mehrere Sätze von Berechtigungsnachweisen im Voraus erlangt und einen oder mehrere der Sätze von Berechtigungsnachweisen zu einem späteren Zeitpunkt an eine oder mehrere zweite Benutzervorrichtungen bereitstellt.

8. Verfahren nach einem oder mehreren der vorhergehenden Ansprüche, das die folgenden Schritte durch die erste Benutzervorrichtung umfasst:
- Bereitstellen der Kennung an die zweite Vorrichtung;
- Empfangen von Informationen von dem Telekommunikationsnetz mittels der zweiten Benutzervorrichtung;
- Übertragen eines oder mehrerer Signalübertragungsschlüssel an die zweite Vorrichtung nach dem Empfangen der Informationen von der zweiten Vorrichtung.

9. Computerprogramm, das Softwarecodeabschnitte aufweist, die dazu ausgebildet sind, wenn sie auf einem Computersystem ausgeführt werden, das Verfahren nach einem oder mehreren der Ansprüche 1-8 durchzuführen.

10. Nichtflüchtiges Computerprogrammmedium, das das Computerprogramm nach Anspruch 9 aufweist.

11. Erste Benutzervorrichtung, die zum Ausführen des Verfahrens nach den Ansprüchen 1-8 ausgebildet ist und eine Schaltungsanordnung aufweist, die mit Computercode zum Steuern von Benutzerdatenaustausch durch die zweite Benutzervorrichtung programmiert ist, wobei der Computercode, wenn er von der Schaltungsanordnung ausgeführt wird, durchführt:
- Erlangen eines Satzes von Berechtigungsnachweisen, wobei der Satz von Berechtigungsnachweisen eine Kennung und eine Mehrzahl von Signalübertragungsschlüsseln für Signalübertragung über das Telekommunikationsnetz umfasst;
- Bereitstellen mindestens eines Teils des Satzes von Berechtigungsnachweisen an die zweite Benutzervorrichtung, um zu ermöglichen, dass die zweite Benutzervorrichtung Benutzerdaten über das Telekommunikationsnetz austauscht;
**gekennzeichnet durch**:
- Abbrechen des Benutzerdatenaustauschs der zweiten Benutzervorrichtung über das Telekommunikationsnetz mittels einer Steueraktion, wobei die Steueraktion bezüglich der erlangten Berechtigungsnachweise durchgeführt wird, die der zweiten Benutzervorrichtung bereitgestellt werden,
wobei die Steueraktion der ersten Benutzervorrichtung das Anweisen des Telekommunikationsnetzes umfasst, die Kennung ungültig zu machen, falls die Kennung der zweiten Benutzervorrichtung bereitgestellt wurde, und/oder einen oder mehrere der der zweiten Benutzervorrichtung bereitgestellten Schlüssel.

## Revendications

1. Procédé de commande, par un premier dispositif utilisateur, d'un échange de données utilisateur d'un second dispositif utilisateur sur un réseau de télécommunication, le premier dispositif utilisateur et le second dispositif utilisateur étant configurés pour se connecter sans fil au réseau de télécommunication, le procédé comprenant les étapes suivantes :
- la récupération d'un ensemble de justificatifs par le premier dispositif utilisateur, l'ensemble de justificatifs comprenant un identificateur et une pluralité de clés de transmission de signal en vue d'une transmission de signal sur le réseau de télécommunication ;
- la fourniture d'au moins une partie de l'ensemble de justificatifs du premier dispositif utilisateur au second dispositif utilisateur afin d'autoriser le second dispositif utilisateur à échanger des données utilisateur sur le réseau de télécommunication,
**caractérisé par** :
- l'abandon de l'échange de données utilisateur du second dispositif utilisateur sur le réseau de télécommunication au moyen d'une action de commande du premier dispositif utilisateur, l'action de commande étant effectuée par rapport aux justificatifs obtenus par le premier dispositif utilisateur et fournis au second dispositif utilisateur,
dans lequel l'action de commande du premier dispositif utilisateur comprend l'ordre fait au réseau de télécommunication d'invalider l'identificateur si l'identificateur a été fourni au second dispositif utilisateur et/ou une ou plusieurs des clés fournies au second dispositif utilisateur.

2. Procédé selon la revendication 1, comprenant en outre l'étape de maintien d'une signalisation entre le premier dispositif utilisateur et le réseau de télécommunication pour l'échange de données utilisateur du second dispositif utilisateur sur le réseau de télécommunication, et où l'action de commande par le premier dispositif utilisateur comprend la manipulation de la signalisation au niveau du premier dispositif utilisateur.

3. Procédé selon la revendication 2, dans lequel le réseau de télécommunication comprend un réseau de l'évolution LTE, et l'ensemble de justificatifs obtenu par le premier dispositif utilisateur inclut une ou plusieurs clés d'une strate de non accès (NAS), le procédé comprenant les étapes suivantes :
- l'omission d'une ou plusieurs des clés NAS de la partie des justificatifs fournie au second dispositif utilisateur, ;
- l'abandon de l'échange de données utilisateur du second dispositif utilisateur grâce à l'action de commande, l'action de commande du premier dispositif utilisateur comprenant une action parmi :
- la transmission d'une demande de déconnexion à message NAS au réseau de télécommunication,
- la transmission d'un message de défaillance d'authentification à la réception d'un défi émis par le réseau de télécommunication pendant une mise à jour de zone de suivi (TAU) ou pendant une procédure d'authentification et d'acceptation de clé.

4. Procédé selon la revendication 1, comprenant en outre les étapes suivantes :
- l'application d'un premier identificateur à partir du réseau de télécommunication qui autorise le premier dispositif utilisateur à échanger des données utilisateur sur le réseau de télécommunication ;
- la demande d'un second identificateur à partir du réseau de télécommunication ;
- l'inclusion du second identificateur dans l'ensemble de justificatifs à fournir au second dispositif utilisateur pour autoriser le second dispositif utilisateur à échanger des données utilisateur sur le réseau de télécommunication.

5. Procédé selon la revendication 1, comprenant l'étape de réception d'un identificateur autorisant le premier dispositif utilisateur à échanger des données utilisateur sur le réseau de télécommunication et la fourniture de cet identificateur au second dispositif utilisateur autorisant le second dispositif utilisateur à échanger des données utilisateur sur le réseau de télécommunication.

6. Procédé selon l'une ou plusieurs des revendications précédentes, comprenant en outre l'étape d'établissement d'une connexion directe, telle qu'une connexion directe LTE ou une connexion Bluetooth, entre le premier dispositif utilisateur et le second dispositif utilisateur pour au moins fournir la partie de l'ensemble de justificatifs au second dispositif utilisateur.

7. Procédé selon l'une ou plusieurs des revendications précédentes, dans lequel le premier dispositif utilisateur récupère un ou plusieurs ensembles de justificatifs à l'avance et fournit ultérieurement un ou plusieurs des ensembles de justificatifs à un ou plusieurs seconds dispositifs utilisateur.

8. Procédé selon l'une ou plusieurs des revendications précédentes, comprenant les étapes réalisées par le premier dispositif utilisateur qui sont :
- la fourniture de l'identificateur au second dispositif ;
- la réception d'informations en provenance du réseau de télécommunication par l'intermédiaire du second dispositif utilisateur ;
- la transmission d'une ou plusieurs clés de transmission de signal au second dispositif après avoir reçu les informations provenant du second dispositif.

9. Programme informatique comprenant des parties de code logiciel configurées, lorsqu'elles sont exécutées sur un système informatique, pour effectuer le procédé conforme à une ou plusieurs des revendications 1 à 8.

10. Support non transitoire de programme informatique comprenant le programme informatique conforme à la revendication 9.

11. Premier dispositif utilisateur configuré pour exécuter le procédé conforme aux revendications 1 à 8 et comprenant des circuits programmés avec un code informatique permettant de commander un échange de données utilisateur par le second dispositif utilisateur, le code informatique, lorsqu'il est exécuté par les circuits, réalisant :
- la récupération d'un ensemble de justificatifs, l'ensemble de justificatifs comprenant un identificateur et une pluralité de clés de transmission de signal en vue d'une transmission de signal sur le réseau de télécommunication ;
- la fourniture d'au moins une partie de l'ensemble de justificatifs au second dispositif utilisateur afin d'autoriser le second dispositif utilisateur à échanger des données utilisateur sur le réseau de télécommunication ;
**caractérisé par** :
- l'abandon de l'échange de données utilisateur du second dispositif utilisateur sur le réseau de télécommunication au moyen d'une action de commande, l'action de commande étant effectuée par rapport aux justificatifs obtenus et fournis au second dispositif utilisateur,
dans lequel l'action de commande du premier dispositif utilisateur comprend l'ordre fait au réseau de télécommunication d'invalider l'identificateur si l'identificateur a été fourni au second dispositif utilisateur et/ou une ou plusieurs des clés fournies au second dispositif utilisateur.
